# EUROPÄISCHE PATENTANMELDUNG

(11) **EP 1 231 398 A2**
(43) Veröffentlichungstag der Anmeldung: **14.08.2002**
(21) Anmeldenummer: 01130014.2
(22) Anmeldetag: 18.12.2001
(51) Int. Cl.: F16D 55/22, F16D 65/12

(54) **Scheibenbremse für Fahrzeuge, insbesondere Kraftfahrzeuge**

(30) Priorität: 10.02.2001 DE 10106177
(71) Anmelder: Dr.Ing. h.c.F. Porsche Aktiengesellschaft, 70435 Stuttgart (DE)
(72) Erfinder: Von Sivers, Rolf, 71287 Weissach-Flacht (DE); Thomas, Claus, 71686 Remseck (DE)

(57) **Zusammenfassung**

Diese Scheibenbremse umfasst eine Bremsscheibe (3) und einen Bremssattel (2), der Belagvorrichtungen (7,8) mit Belagflächen (22,23) trägt, wobei die Bremsscheibe auf den den Belagflächen zugekehrten Seiten konkave Bremsscheibenflächen (20,21) aufweist, die mit den konvex ausgebildeten Belagflächen zusammenarbeiten.

Zur Minimierung der Potentiale zur Geräuschentwicklung der Scheibenbremse wird folgendes vorgeschlagen:
- die konkave Bremsscheibenflächen aufweisende Bremsscheibe ist mehrteilig ausgebildet,
- die Bremsscheibe ist zumindest an einer der beiden Bremsscheibenflächen mit einer rinnenartigen Ausnehmung (30) versehen,
- die Belagvorrichtungen umfassen Belagkörper mit einer Hochleistungsbelagmischung.

## Beschreibung

Die Erfindung bezieht sich auf eine Scheibenbremse für Fahrzeuge, insbesondere Kraftfahrzeuge mit einer Bremsscheibe und einem Bremssattel nach dem Oberbegriff des Patentanspruchs 1.

Zur Vermeidung eines ungleichmäßigen Verschleißes von Bremsscheiben einer Scheibenbremse ist es bekannt, DE 43 36 094 A1, eine Bremsscheibe durch Konturierung zu vergrößern. Dabei ist bei einer Ausführungsform die Bremsscheibe konkav gewölbt. Dieser Ausführung haftet der Nachteil an, dass, wenn die Scheibenbremse mit niederem Systemdruck arbeitet bspw. beim Anfahren und Anhalten im Stadtverkehr störende Geräuschemissionen auftreten.

Die DE 198 37 166 A1 zeigt eine für den Einbau in ein Kraftfahrzeug geeignete Scheibenbremse mit einer Bremsscheibe, die mit beabstandeten konkaven Bremsscheibenflächen versehen ist. Mit den konkaven Bremsscheibenflächen arbeiten konvexe Belagflächen von Belagkörpern zusammen, die in Verbindung mit Belagträgern Belagvorrichtungen bilden. Jeder Belagkörper ist mit einer ebenen Tragfläche des zugehörigen Belagträgers verbunden. Dank der konkaven Bremsscheibenflächen und der konvexen Belagflächen, die mit definiertem Formschluss zusammenarbeiten, werden störende Geräusche bspw. bei Auslaufbremsungen - Fußgängerüberweg, Verkehrsampeln - deutlich reduziert.

Aufgabe der Erfindung ist es, an der Scheibenbremse mit den konkaven Bremsscheibenflächen und den konvexen Belagflächen solche Vorkehrungen zu treffen, dass die Potentiale für Geräuschentwicklungen bei definierten Fahr- und Bremszuständen minimiert werden.

Nach der Erfindung wird diese Aufgabe durch Merkmale des Patentanspruchs 1 gelöst. Weitere, die Erfindung optimierende und ausgestaltende Merkmale sind in den nachfolgenden Ansprüchen enthalten.

Die mit der Erfindung hauptsächlich erzielten Vorteile sind darin zu sehen, dass die Scheibenbremse, die definierten Formschluss bewirkende konkave Bremsscheibenflächen und konvexe Belagflächen umfasst, durch eine oder mehrere Maßnahmen bezüglich geringer oder nicht störender Geräuschemissionen optimiert wird. Hierzu hat sich bei Untersuchungen folgendes als vorteilhaft herausgestellt: Die Bremsscheibe ist mehrteilig ausgeführt, die Bremsbeläge umfassen Belagkörper mit einer Hochleistungsbelagmischung, die Bremsscheibe ist zumindest an einer Bremsscheibenfläche mit einer rinnenartigen Ausnehmung versehen, am Bremssattel ist wenigstens ein Tilger vorgesehen, an den Belagvorrichtungen ist wenigstens ein Dämpfungselement angeordnet und schließlich kann die Bremsscheibe aus Keramik, Grauguss oder einer Legierung aus Aluminium und Grauguss bestehen. Diese Maßnahmen sind konstruktiv darstellbar- und mit vertretbaren Mitteln in die Praxis umsetzbar.

In der Zeichnung wird ein Ausführungsbeispiel Erfindung gezeigt, das nachstehend näher beschrieben ist.

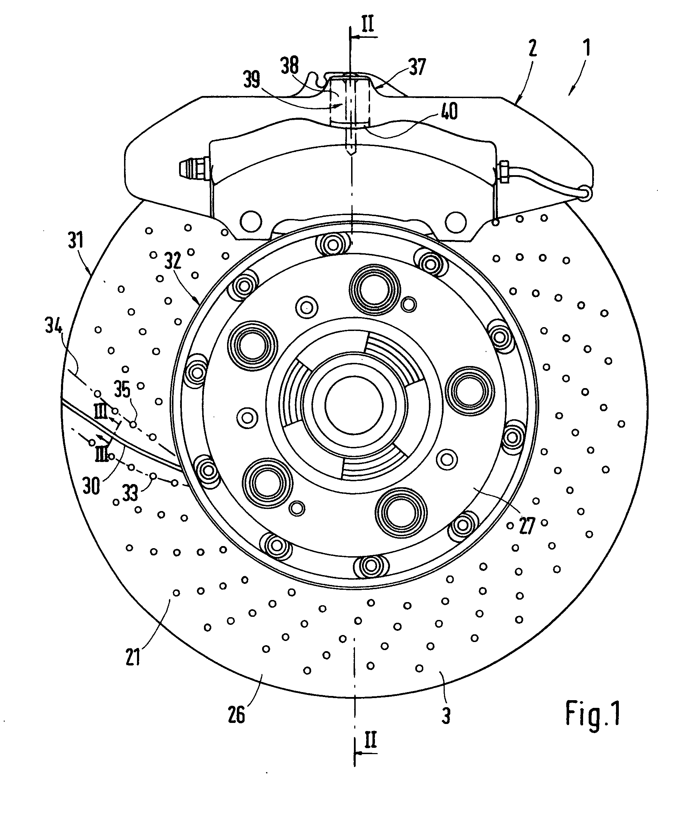

Es zeigen
- Fig.1: eine Hauptansicht einer Scheibenbremse,
- Fig. 2: einen Schnitt nach der Linie II-II der Fig. 1,
- Fig. 3: einen Schnitt nach der Linie III-III der Fig.1,
- Fig. 4: einen Schnitt nach der Linie IV-IV der Fig. 2,
- Fig. 5: ein Diagramm, das den Einfluss von Maßnahmen zur Geräuschentwicklung einer Scheibenbremse verdeutlicht.

Eine Scheibenbremse 1, die z.B. in ein Straßenfahrzeug, ein Schienenfahrzeug, ein Flugzeug oder dergl. eingebaut sein kann, umfasst einen Bremssattel 2 und eine Bremsscheibe 3 mit gegenüberliegenden Reibringhälften 4,5, die einen Kühlkanal 6 begrenzen.

Der Bremssattel 2 ist als sogenannter Festsattel ausgeführt, der beiderseits der Bremsscheibe schwimmend gelagerte Belagvorrichtungen 7,8 aufweist; letztere sind mittels Kolben 9,10 beaufschlagbar, die in axialer Richtung A-A der Bremsscheibe 3 wirksam sind. Die Kolben 9,10 sind axial beweglich in Bohrungen 11,12 von Sattelgehäusen 13,14 gelagert. Jede Belagvorrichtung bspw. 7 umfasst einen Belagträger 15 und einen Belagkörper 16, die fest an einer Tragfläche 17 des Belagträgers 15 miteinander verbunden sind. Der Belagträger 15 ist mit einer Bohrung 18 versehen, die einen sich zwischen den Sattelgehäusen 13,14 erstreckenden Bolzen 19 umgibt. Auf letzterem ist die Belagvorrichtung 7 verschiebbar, und zwar in dessen axialer Richtung.

Die Bremsscheibe 3 weist auf den den Belagvorrichtungen 7,8 zugekehrten Seite, d.h. an den Reibringhälften 4,5 konkave Bremsscheibenflächen 20,21 auf, wobei die Konkavität der Bremsscheibenflächen 20,21 von einem Radius R bestimmt wird. Die Belagvorrichtungen 7,8 sind mit Belagflächen 22,23 versehen, die konvex ausgebildet sind und mit den Bremsscheibenflächen 20,21 zusammenarbeiten; die Konvexität wird durch den Radius R bestimmt.

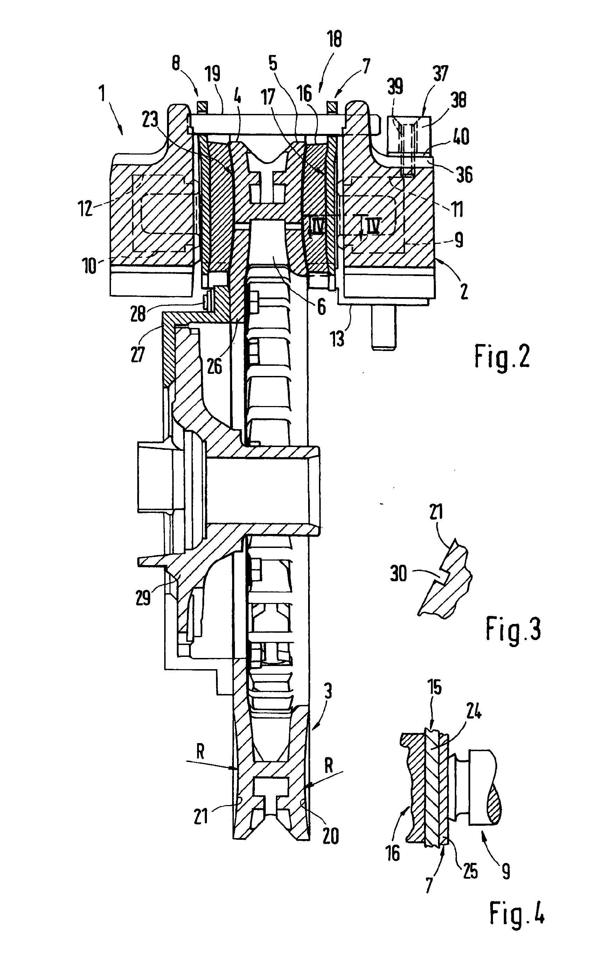

Der Belagträger 15 - Fig. 4 - ist nach Art einer Platte ausgeführt, die in radialer Richtung der Bremsscheibe 3 verläuft und neben der Tragfläche 17 eine Rückseite 24 besitzt. Die Tragfläche 17 und Rückseite 24 sind mit parallelem Abstand zueinander angeordnet, wobei die Rückseite 24 mit dem Kolben 9 des Sattelgehäuses 13 zusammenwirkt. Zwischen Kolben 9 und der Rückseite 24 ist ein Dämpfungselement 25 vorgesehen, das nach Art einer Platte ausgebildet und mit dem Belagträger 15 verbunden ist.

Die Bremsscheibe 3, die aus Keramik, Grauguss oder einer Legierung aus Aluminium und Grauguss bestehen kann, ist mehrteilig ausgebildet. Hierzu ist ein Ringteil 26, das die Reibringhälften 4,5 umfasst, mit einem Zentrumsteil 27 unter Vermittlung von Schrauben 28 verbunden. Das Zentrumsteil 27 weist einen Topf 28 auf, der zur Aufnahme einer Radnabe 29 ausgelegt ist. Einzelheiten einer mehrteiligen Bremsscheibe, insbesondere bezüglich schwingungsdämpfender der Schraubverbindungen zwischen Ringteil 26 und Zentrumsteil 27 sind in der DE 44 46 017 C2 beschrieben.

An wenigsten einer Bremsscheibenfläche 21 der Bremsscheibe 3 ist eine rinnenartige Ausnehmung 30 eingearbeitet, die einen evolventenartigen Verlauf an dieser Bremsscheibenfläche 21 aufweist, d.h. zwischen einer äußeren Kreisbegrenzung 31 und einer inneren Kreisbegrenzung 32. Der Querschnitt der Ausnehmung 30 ist gemäß Fig. 3 U-förmig, er kann aber auch dreieck- oder kreisabschnittförmig sein. Außerdem verläuft besagte Ausnehmung 30 zwischen zwei nach Art von Evolventen verlaufenden Reihen 33 und 34 von Axialbohrungen 35, mit denen die Bremsscheibenfläche 20 versehen ist

Die Belagkörper 16 der Belagvorrichtungen 7,8 bestehen aus einer Hochleistungsbelagmischung, die zwar temperaturresistent, verschleißfest und fadingstabil ist, aber aufgrund dieser Eigenschaften ein geräuschprägnantes Verhalten entwickelt.

In Fig. 2 ist an einer Stufe 36 des Sattelgehäuses 13 eine Tilger 37 angebracht, der durch einen Massekörper 38 aus einem eisenmetallischen Werkstoff gebildet und mittels einer oder mehrerer Schrauben 39 am Sattelgehäuse 13 in Lage gehalten wird, und zwar unter Zwischenschaltung eines elastischen Elements 40.

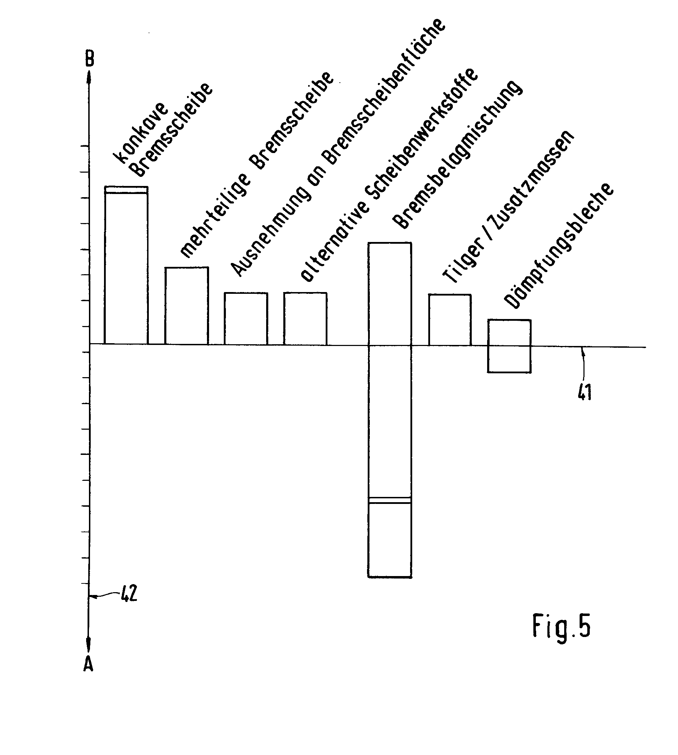

Das Diagramm gemäß Fig. 5 gibt Maßnahmen zur Beeinflussung der Geräuschentwicklung der Scheibenbremse 3 wieder. Dabei verkörpert die Abszissenachse 41 ein gegebenes Referenzniveau, und entlang der Abszissenachse 41 sind Balken aufgetragen, die die Wirkung der Einzelmaßnahmen konkave Bremsscheibe, mehrteilige Bremsscheibe, Ausnehmung an der Bremsscheibenfläche der Bremsscheibe, alternative Werkstoffe der Bremsscheibe u.a. Keramik, Belagvorrichtungen mit Hochleistungsbelagmischung, Tilger und Dämpfungselement verdeutlichen. Auf der Ordinatenachse 42 des Diagramms ist die Geräuschempfindlichkeit angegeben, wobei unterhalb der Abszissenachse 39 in Richtung A die Wahrscheinlichkeit, dass Geräusche auftreten, dargestellt ist; oberhalb der Abszissenachse 41 in Richtung B die Wahrscheinlichkeit, dass keine Geräusche auftreten. Hierdurch wird dargelegt, dass zum einen die konkaven Bremsscheiben - in Verbindung mit den konvexen Belagflächen - bereits einen signifikanten Beitrag zur Geräuschreduktion leisten und zum anderen, dass die Hochleistungsbelagmischung der Belagvorrichtungen, die eine relativ hohe Wahrscheinlichkeit der Geräuschentwicklung aufweist entweder allein mit den konkaven Bremsscheiben und/oder mit den weiteren Maßnahme einzeln oder in Kombination zu dem angestrebten Ziel, will heißen geräuscharmer Betrieb der Scheibenbremse, namentlich bei Auslaufbremsungen, führt.

## Patentansprüche

1. Scheibenbremse für Fahrzeuge insbesondere Kraftfahrzeuge mit einer Bremsscheibe und einem Bremssattel, der Belagvorrichtungen mit Belagflächen trägt, wobei die Bremsscheibe auf den den Belagflächen zugekehrten Seiten konkave Bremsscheibenflächen aufweist, die mit den konvex ausgebildeten Belagflächen zusammenarbeiten, **gekennzeichnet durch** folgende Merkmale:
- die konkave Bremsscheibenflächen (20,21) aufweisende Bremsscheibe (3) ist mehrteilig ausgebildet,
- die Bremsscheibe (3) ist zumindest an einer der beiden Bremsscheibenflächen (20) mit einer rinnenartige Ausnehmung (31) versehen,
- die Belagvorrichtungen (7,8) umfassen Belagkörper (16) mit einer Hochleistungsbelagmischung.

2. Scheibenbremse nach Anspruch 1, **dadurch gekennzeichnet, dass** die mehrteilige Bremsscheibe (3) ein Ringteil (26) umfasst, das mit einem Zentrumsteil (27) unter Vermittlung von Schrauben (28) verbunden ist.

3. Scheibenbremse nach Anspruch 1, **dadurch gekennzeichnet, dass** die rinnenartige Ausnehmung (31) einen evolventenartigen Verlauf an der Bremsscheibenfläche (20,21) aufweist.

4. Scheibenbremse nach Anspruch 3, **dadurch gekennzeichnet, dass** die Ausnehmung (31) sich zwischen zwei nach Art von Evolventen verlaufende Reihen (32,33) von Axialbohrungen (34) in der Bremsscheibenfläche (20,21) erstreckt.

5. Scheibenbremse nach Anspruch 1, **dadurch gekennzeichnet, dass** die Hochleistungsbelagmischung temperaturresistent, verschleißfest und fadingstabil ist.

6. Scheibenbremse mit beiderseits der Bremsscheibe angeordneten Sattelgehäusen eines Bremssattels, in denen Kolben gelagert sind, die mit Belagvorrichtungen zusammenarbeiten, wobei jede Belagvorrichtung einen Belagträger und einen Belagkörper umfasst, welcher Belagträger mit dem benachbarten Kolben zusammenarbeitet nach Anspruch 1, **dadurch gekennzeichnet, dass** am Bremssattel (2) vorzugsweise an einem Sattelgehäuse (13,14) wenigstens ein Tilger (36) und an der Belagvorrichtung (7,8) vorzugsweise an einer dem Kolben (9,10) zugekehrten Seite des Belagträgers (15) ein Dämpfungselemente (25) angebracht ist.

7. Scheibenbremse nach den Ansprüchen 6, **dadurch gekennzeichnet, dass** der Tilger (37) ein Massekörper (38) bspw. aus eisenmetallischem Werkstoff ist, der unter Vermittlung eines elastischen Elements (40) am Bremssattel (2) gehalten ist.

8. Scheibenbremse nach Anspruch 7, **dadurch gekennzeichnet, dass** das Dämpfungselement (25) durch eine Art Platte gebildet wird, die mit dem Belagträger (15) verbunden ist.

9. Scheibenbremse für Fahrzeuge insbesondere Kraftfahrzeuge mit einer Bremsscheibe und einem Bremssattel, der Belagvorrichtungen mit Belagflächen trägt, wobei die Bremsscheibe auf den den Belagflächen zugekehrten Seiten konkave Bremsscheibenflächen aufweist, die mit den konvex ausgebildeten Belagflächen zusammenarbeitet, **dadurch gekennzeichnet, dass** die Scheibenbremse mit wenigstens einer der folgenden Maßnahme versehen ist
- die Belagvorrichtungen (7,8) umfassen Belagkörper (16) mit einer Hochleistungsbelagmischung,
- die konkave Bremsscheibenflächen (20,21) aufweisende Bremsscheibe (2) ist mehrteilig ausgebildet,
- die Bremsscheibe (3) ist zumindest an einer der beiden Bremsscheibenfläche (20,21) mit einer rinnenartigen Ausnehmung (31) versehen,
- am Bremssattel (3) ist wenigstens ein Tilger (37) vorgesehen, an den Belagvorrichtungen (7,8) ist wenigstens ein Dämpfungselement (25) angeordnet,
- die Bremsscheibe (3) besteht aus Keramik, Grauguss oder einer Legierung aus Aluminium, Grauguss oder dergl..
